# FASCICULE DE BREVET EUROPEEN

(11) **EP 3 482 269 B1**
(45) Date de publication et mention de la délivrance du brevet: **11.08.2021**
(21) Numéro de dépôt: 17740461.3
(22) Date de dépôt: 29.06.2017
(51) Int. Cl.: G05D 1/02, B60W 30/00, G08G 1/00, B60W 30/165, G08G 1/16, B60W 50/14, B60W 30/18

(54) **PROCÉDÉ DE SUIVI AUTOMATIQUE D'UN VÉHICULE ET DISPOSITIF DE CONDUITE AUTONOME**
VERFAHREN ZUM AUTOMATISCHEN TRACKING EINES FAHRZEUGS UND VORRICHTUNG FÜR AUTONOME ANSTEUERUNG
METHOD FOR AUTOMATICALLY FOLLOWING A VEHICLE AND AUTONOMOUS DRIVING APPARATUS

(30) Priorité: 06.07.2016 FR 1656491
(43) Date de publication de la demande: 15.05.2019
(73) Titulaire: PSA Automobiles SA, 78300 Poissy (FR)
(72) Inventeur: LAINE, Vincent, 78340 Les Clayes Sous Bois (FR); FERON, Stephane, 92350 Le Plessis Robinson (FR); TACCORI DUVERGEY, Celine, 92120 Montrouge (FR)
(74) Mandataire: Jeannin, Laurent Jean-Pierre
(86) Numéro de dépôt international: PCT/FR2017/051762
(87) Numéro de publication internationale: WO 2018/007725

(56) Documents cités:
- EP-A1- 1 852 325
- EP-A1- 2 995 519

## Description

La présente invention concerne de manière générale un procédé de conduite autonome pour véhicule. En particulier, l'invention concerne un procédé de conduite autonome permettant à un véhicule de maintenir une situation de conduite immédiatement derrière un véhicule cible. L'invention concerne en outre un dispositif de conduite autonome ou un véhicule permettant de mettre en œuvre un tel procédé.

Il est connu dans l'art antérieur des procédés de conduite autonome permettant de suivre un véhicule cible. Le document EP1457948 décrit un tel procédé dans lequel le véhicule détermine une probabilité d'intersection entre ledit véhicule et un véhicule tiers et arrête la fonction de suivi de véhicule dans le cas où la probabilité d'intersection devient supérieure ou égale à une valeur prédéterminée.

En contrepartie, ce système présente l'inconvénient de nécessiter une communication constante avec le véhicule cible et ne peut donc fonctionner qu'en suivant un véhicule cible spécialement équipé. On connait aussi par le document US20160068156 un système de commande d'un véhicule autonome comprenant des caméras pour obtenir des données d'image des véhicules voisins dans un voisinage du véhicule autonome et pour identifier les caractéristiques physiques des véhicules voisins. On connait aussi par le document EP1852325 un procédé pour la régulation d'un véhicule automobile dans lequel le véhicule automobile est régulé dans le sens longitudinal et transversal sur une route avec plusieurs voies de circulation et poursuivant un véhicule qui le précède. La poursuite du véhicule précédent peut être interrompue en cas de détection d'un changement de voie de circulation du véhicule précédent.

Un but de la présente invention est de répondre aux inconvénients du document de l'art antérieur mentionnés ci-dessus et en particulier de proposer un procédé de conduite autonome permettant à un véhicule de maintenir une situation de conduite immédiatement derrière un véhicule cible de n'importe quel type, par exemple un véhicule non autonome.

Pour cela, un premier aspect de l'invention concerne un procédé de conduite autonome permettant à un véhicule de maintenir une situation de conduite immédiatement derrière un véhicule cible, selon la revendication 1.

Un tel procédé permet donc de suivre de façon autonome n'importe quel véhicule cible situé immédiatement devant le véhicule mettant en œuvre le procédé, c'est-à-dire que les deux véhicules roulent dans la même voie de circulation sans véhicule intermédiaire entre les deux véhicules. De cette façon, la conduite autonome peut s'effectuer en vue directe de n'importe quel véhicule cible, c'est-à-dire sans communication de véhicule à véhicule. Le procédé selon la présente invention permet en outre de maintenir la conduite autonome y compris lorsque le véhicule cible change de voie de circulation ou lorsqu'un véhicule tiers s'insère entre le véhicule et le véhicule cible. Enfin, le procédé selon la présente invention peut être mis en œuvre par un dispositif autonome ou une voiture autonome selon l'état de la technique et ne nécessite pas de nouvel équipement spécifique.

L'étape subséquente de reconnaissance du véhicule cible par les premiers moyens de détection à partir des caractéristiques distinctives enregistrées lors de l'étape de détection et enregistrement de caractéristiques distinctives du véhicule cible, permet de s'assurer que la situation de conduite immédiatement derrière le véhicule cible a bien été retrouvée afin de reprendre de façon autonome la conduite autonome immédiatement derrière le véhicule cible.

De manière avantageuse, si l'étape de vérification détermine qu'un changement de voie selon le scénario prédéfini n'est pas possible, cette étape de vérification est recommencée selon un autre scénario incluant au moins un paramètre différent dudit scénario prédéfini. Par exemple, le scénario prédéfini peut être paramétré par le constructeur du véhicule et l'autre scénario peut être paramétré par le propriétaire du véhicule, par exemple lors de l'achat du véhicule ou avant le trajet. Le paramètre différent peut être la durée ou la distance du changement de voie, ou bien la vitesse du véhicule durant le changement de voie. Par exemple, la vitesse du véhicule lors du changement de voie peut-être constante, c'est à dire égale à la vitesse de circulation dans le scénario prédéterminé et peut comprendre une accélération pour l'autre scénario, c'est-à-dire être supérieure à la vitesse de circulation du véhicule dans sa voie de circulation.

Ce mode de réalisation permet donc au propriétaire ou à un occupant du véhicule d'adapter le procédé de conduite autonome au confort souhaité ou aux conditions de circulation locales ou envisagées.

De manière avantageuse, une étape de réalisation par les moyens de conduite autonome dudit au moins un changement de voie selon ledit autre scénario est soumis à une approbation préalable d'un occupant du véhicule au travers de moyens d'interface. Un occupant du véhicule peut donc intervenir dans la conduite autonome afin de l'adapter au confort désiré ou aux conditions de circulation sans pour autant désactiver le dispositif de conduite autonome c'est-à-dire sans reprendre directement le contrôle du véhicule. Le conducteur agit alors simplement sur la stratégie de la conduite autonome. Les moyens d'interface comprennent par exemple un écran tactile, une interface vocale et/ou des boutons ou leviers de commande.

De manière avantageuse, le procédé selon la présente invention comprend en outre un changement de voie supplémentaire de telle sorte à dépasser un véhicule tiers positionné entre ledit véhicule et ledit véhicule cible. Ainsi, un tel procédé peut reprendre de façon autonome le suivi du véhicule cible même si un véhicule tiers est venu s'intercaler entre le véhicule et le véhicule cible.

Le procédé selon la présente invention peut comprendre une étape de communication par un système télématique pour informer le véhicule cible ou un occupant du véhicule cible que ledit véhicule n'est plus dans une situation de conduite immédiatement derrière ledit véhicule cible. Ainsi, le véhicule cible ou le conducteur du véhicule cible peut adapter sa conduite ou bien contacter l'occupant du véhicule.

Alternativement ou en combinaison, l'étape de communication par un système télématique peut transmettre une requête visant à adapter la conduite dudit véhicule cible, par exemple dans le cas où le véhicule cible est un véhicule autonome.

Un second aspect de l'invention est un dispositif de conduite autonome comprenant au moins des premiers moyens de détection, des seconds moyens de détection, des moyens de contrôle et des moyens de conduite autonome agencés pour mettre en œuvre le procédé de conduite autonome selon le premier aspect de l'invention.

Un dernier aspect de l'invention concerne un véhicule comportant au moins un dispositif de conduite autonome selon le deuxième aspect de l'invention.

Par exemple, les premiers et seconds moyens de détection, les moyens de contrôle et les moyens de conduites autonomes comprennent un ou plusieurs capteurs choisis parmi : caméra sensible à la lumière visible, caméra sensible à la lumière infrarouge, radar, radar laser et capteur ultrason ainsi qu'au moins un calculateur.

Enfin, le calculateur des moyens de conduite autonome peut être le même calculateur que le calculateur des premiers et seconds moyens de détection et des moyens de contrôle, ou bien il peut s'agir d'un ou plusieurs calculateurs différents fonctionnant de concert. Cet au moins un calculateur des moyens de conduite autonome permet d'instruire des actionneurs des moyens de conduite autonome afin de réaliser la conduite autonome à partir des données en provenance des capteurs ou d'un autre calculateur.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente un schéma de principe d'un dispositif de conduite autonome selon la présente invention,
- la figure 2 décrit un procédé de conduite autonome selon la présente invention.

Dans le cadre de cette description, le terme «véhicule» s'applique à tout véhicule mettant en œuvre le procédé selon la présente invention et l'expression « véhicule cible » ou « véhicule suivi » s'applique au véhicule suivi par le véhicule mettant en œuvre le procédé selon la présente invention. Le terme «conducteur» s'applique à l'occupant du véhicule en position d'en prendre les commandes, mais n'en assurant pas nécessairement la conduite. L'expression « conduite autonome » signifie une automatisation de la conduite du véhicule selon les niveaux 3 ou 4 des définitions données par l'Organisation Internationale des Constructeurs Automobiles (OICA). Enfin, le terme « scénario » s'applique à un ensemble de paramètres régissant la conduite autonome du véhicule dans une situation de conduite donnée.

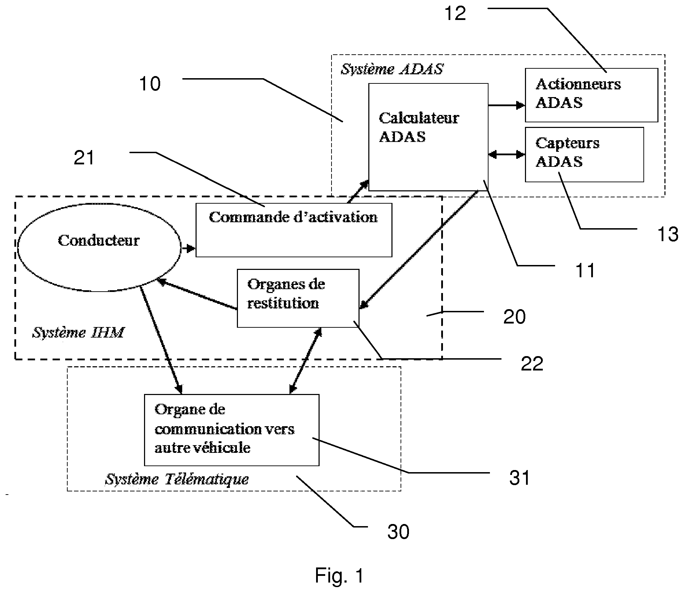

La figure 1 représente un ensemble de moyens techniques permettant la mise en œuvre d'un procédé de conduite autonome selon la présente invention. Il comprend ainsi un système d'assistance à la conduite (ADAS) 10, un système d'interface homme-machine (IHM) 20 et un système télématique 30.

Le système ADAS 10 comprend une unité de calcul sous la forme d'un calculateur 11 ainsi que des actionneurs 12 et des capteurs 13. Le calculateur 11 est un système informatique selon l'état de la technique, comprenant un ou plusieurs microprocesseurs, des unités de mémoire, des interfaces d'entrée-sortie et un programme de base préchargé. Le calculateur 11 est relié par une interface d'entrée-sortie aux actionneurs 12, qui comprennent des dispositifs selon l'état de la technique capables d'agir sur la direction, l'accélérateur, le système de freinage et éventuellement sur la transmission du véhicule.

Le calculateur 11 est en outre relié par une autre interface d'entrée-sortie à des capteurs 13 selon l'état de la technique. Ces capteurs sont capables de percevoir des caractéristiques distinctives d'un ou plusieurs véhicules pour enregistrement par le calculateur 11 et forment alors avec le calculateur 11 des premiers moyens de détection. Ils sont également aptes à percevoir les mouvements et/ou les indications d'un véhicule situé immédiatement devant ou bien dans une voie parallèle afin de détecter une situation dans laquelle le véhicule n'est plus ou ne sera plus dans une situation de conduite immédiatement derrière un véhicule cible et ils forment alors avec le calculateur 11 des seconds moyens de détection. Avec les actionneurs 12 et le calculateur 11, les capteurs 13 forment également des moyens de conduite autonome aptes à maintenir une situation de conduite du véhicule immédiatement derrière un véhicule cible en reproduisant la conduite du véhicule cible. Enfin, les capteurs 13 et le calculateur 11 peuvent analyser la position du véhicule, sa vitesse, l'environnement dans lequel le véhicule évolue ainsi que la position d'autres usagers tels que d'autres véhicules, des piétons et des deux-roues et forment alors des moyens de contrôle.

Les capteurs 13 peuvent être choisis parmi une ou plusieurs caméras sensibles à la lumière visible, une ou plusieurs caméras sensibles à la lumière infrarouge et un ou plusieurs radars, radars laser (lidar) et capteurs ultrason.

Un même capteur peut être compris dans les premiers moyens de détection, les seconds moyens de détection et les moyens de contrôle. Par ailleurs, des moyens de positionnement comme un récepteur GPS, Glonass et/ou Galileo peuvent être prévus.

Le calculateur 11 est également connecté au système IHM 20 afin de recevoir une commande d'activation de la part du conducteur par un système de commande d'activation 21 ainsi que transmettre des informations au conducteur ou aux occupants du véhicule par des organes de restitution 22. Le système de commande d'activation 21 peut comprendre une manette ou un bouton dédié sur le tableau de bord du véhicule, une icône sur un écran tactile ou encore une interface de commande vocale. Les organes de restitution 22 peuvent comprendre des témoins sur le tableau de bord du véhicule, des animations ou des représentations sur un écran installé dans l'habitacle du véhicule ainsi que des informations sonores ou vocales. Le système de commande d'activation 21 et les organes de restitution 22 forment donc des moyens d'interface.

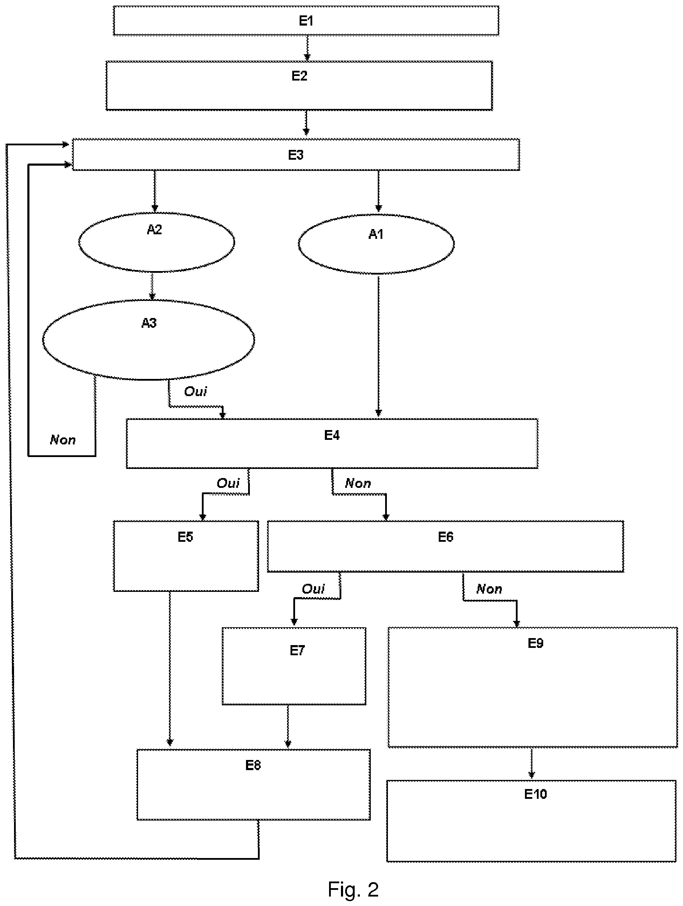

Enfin, le système IHM 20 est connecté au système télématique 30 comprenant un ou plusieurs organes de communication 31 vers un autre véhicule. Ces organes de communication peuvent être choisis parmi un système GSM capable de communiquer par SMS ou par données mobiles, un système radio comme Bluetooth, Wi-Fi, ZigBee, Sarah et/ou un système de communication optique de type infrarouge ou Li-Fi. Ce système télématique 30 est capable de communiquer avec un ou plusieurs autres véhicules équipés d'un système télématique compatible ou bien directement sur un téléphone mobile d'un occupant d'un autre véhicule par exemple pour transmettre des messages venant du conducteur ou des occupants du véhicule ou bien des messages issus du calculateur 11 au travers des organes de restitution 22. Il peut s'agir de simples messages d'information, par exemple pour informer les occupants d'un véhicule suivi d'un arrêt prochain ou d'un changement d'itinéraire, de messages techniques incluant des pannes ou des défauts survenant dans le véhicule ainsi que de messages sur l'état de suivi quand le véhicule suit l'autre véhicule comme véhicule cible de façon autonome selon le procédé détaillé à la figure 2.

En référence à la figure 2, le procédé de conduite autonome selon la présente invention comprend une première étape E1 (Activation de la fonction « Suivi de véhicule cible ») dans laquelle la fonction de suivi d'un véhicule cible est activée par le conducteur du véhicule. Ceci peut se faire lorsque le véhicule est situé immédiatement derrière le véhicule cible, ou au moins à proximité.

Le véhicule détecte des caractéristiques distinctives du véhicule cible (étape E2 - Détection et enregistrement de caractéristiques distinctives du véhicule cible) par les premiers moyens de détection, par exemple la plaque d'immatriculation, la couleur, la forme générale, l'écho radar ou lidar ou encore d'éventuels impacts ou autocollants visibles sur le véhicule cible. Ces caractéristiques distinctives sont enregistrées dans le calculateur 11 et éventuellement soumises au conducteur du véhicule pour approbation au travers du système IHM 20. Ainsi, tout type de véhicule peut être suivi en se basant sur ses caractéristiques extérieures sans nécessiter d'équipement spécifique.

Le véhicule est alors capable de suivre le véhicule cible de façon autonome, c'est-à-dire sans intervention du conducteur, en restant immédiatement derrière le véhicule cible (étape E3 - Conduite autonome immédiatement derrière le véhicule cible). Par exemple, le véhicule détecte et reproduit grâce au système ADAS 10 les opérations de conduite du véhicule cible comme des accélérations, des freinages ou des changements de direction afin de se maintenir dans une voie de circulation. Le véhicule surveille en continu par les capteurs 13 son environnement afin de prévenir toute manœuvre dangereuse notamment de la part d'un autre usager.

Dans le cas où le véhicule cible change de voie de circulation (action A1), par exemple pour prendre une sortie autoroutière, un échangeur autoroutier ou encore doubler un véhicule lent, ou reste dans la voie de circulation (action A2) et qu'un véhicule tiers vient s'intercaler entre le véhicule et le véhicule cible (action A3), le véhicule n'est alors plus situé immédiatement derrière le véhicule cible et ne peut donc plus détecter la conduite du véhicule cible. Le véhicule détecte ce changement de voie par les seconds moyens de détection par exemple en enregistrant le décalage du véhicule suivi par rapport à la voie de circulation matérialisée par des marquages au sol, en repérant une brusque augmentation de la distance au véhicule situé immédiatement devant et/ou en détectant un changement des caractéristiques distinctives du véhicule situé immédiatement devant. Le changement de voie du véhicule cible peut aussi être anticipé par exemple en repérant un clignotant allumé du véhicule cible ou bien en repérant les changements de voie requis pour suivre un parcours prédéfini.

Le véhicule vérifie alors la possibilité de réaliser un changement de voie selon un scénario prédéfini (étape E4 - Vérification de la possibilité de réaliser un changement de voie selon un scénario prédéfini). Cette vérification est réalisée par le calculateur 11 selon les informations venant des capteurs 13, c'est-à-dire par les moyens de contrôle, en comparaison d'un scénario prédéfini. Ce scénario est prédéfini par exemple par le constructeur ou l'importateur du véhicule dans le calculateur 11 et comprend des paramètres tels que la vitesse de changement de voie, la distance de changement de voie ou encore la durée de changement de voie, éventuellement selon le contexte dans lequel le changement de voie est effectué.

Par exemple, ce scénario prédéfini peut comprendre un scénario de changement de voie à vitesse constante du véhicule. Les moyens de contrôle évaluent alors s'il est possible de changer de voie en maintenant la vitesse du véhicule et en toute sécurité c'est-à-dire sans gêner d'autres véhicules circulant à des vitesses plus élevées dans la voie de circulation envisagée. Si la possibilité est validée, c'est-à-dire que le calculateur 11 détermine qu'un tel changement de voie est possible à vitesse constante et en toute sécurité, le changement de voie est alors effectué selon ce scénario par une action appropriée sur les actionneurs 12 (étape E5 - Changement de voie selon le scénario prédéfini).

Si un changement de voie selon le scénario prédéfini n'est pas possible, par exemple du fait d'un véhicule tiers en approche sur la voie où circule le véhicule cible, l'étape de vérification est recommencée selon un autre scénario, par exemple paramétré par le conducteur ou le propriétaire du véhicule et comprenant au moins un paramètre différent en comparaison avec le scénario prédéfini (étape E6 - Vérification de la possibilité de réaliser un changement de voie selon un autre scénario). Ce paramètre peut être la vitesse de changement de voie, une durée ou une distance de changement de voie plus courte, etc. Par exemple, le conducteur a pu programmer une vitesse de changement de voie supérieure à la vitesse de circulation. Une vérification est donc faite par les moyens de contrôle selon cet autre scénario et si le résultat de la vérification est positif, c'est-à-dire que le véhicule détermine qu'il peut effectuer le changement de voie en toute sécurité selon cet autre scénario, le changement de voie est alors réalisé par une action appropriée du calculateur 11 sur les actionneurs 12 (étape E7 - Changement de voie selon un autre scénario). Par exemple, le véhicule va accélérer progressivement à la vitesse de changement de voie tout en se décalant dans la voie de circulation désirée, afin de ne pas gêner ou surprendre un autre usager circulant sur cette voie de circulation.

Une fois cette étape E7 de changement de voie effectuée, le véhicule va faire une étape E8 de reconnaissance du véhicule cible grâce aux capteurs 13 et à partir des caractéristiques distinctives enregistrées dans le calculateur 11 lors de l'étape E2 (étape E8 - Reconnaissance du véhicule cible à partie des caractéristiques distinctives). Cette étape E8 peut aussi être réalisée après l'étape E5 (Changement de voie selon le scénario prédéfini). Cette étape E8 permet de reprendre de façon autonome la conduite autonome immédiatement derrière le véhicule cible à partir du moment où le véhicule cible a bien été reconnu. Au besoin, un deuxième changement de voie est effectué pour revenir dans la voie de circulation initiale, par exemple dans le cas où le véhicule cible a doublé un véhicule lent ou un obstacle et est donc revenu dans la voie de circulation initiale.

Ainsi, le véhicule mettant en œuvre ce procédé peut maintenir sa situation de conduite immédiatement derrière un véhicule cible, sans aucune communication avec le véhicule cible et sans intervention humaine requise.

Optionnellement, la possibilité de changement de voie selon l'autre scénario est soumise au conducteur pour approbation préalable durant ou avant un trajet au travers du système IHM 20. Le conducteur garde ainsi un contrôle indirect sur la conduite autonome et peut l'adapter en fonction du confort souhaité, de son emploi du temps ou des conditions de circulation.

Dans le cas où le changement de voie n'est pas possible, le calculateur se réfère au conducteur à l'étape E9 grâce au système IHM afin de lui proposer de poursuivre la conduite en mode autonome, mais sans véhicule cible, c'est-à-dire en décidant de façon autonome ou sous la supervision du conducteur des opérations de conduite auparavant effectuées à l'exemple du véhicule cible (étape E9 - Interaction avec un occupant du véhicule). Alternativement, le véhicule propose au conducteur de reprendre la conduite du véhicule en mode manuel, c'est-à-dire que le conducteur assume directement la conduite du véhicule.

Après la reprise de la conduite en mode manuel par le conducteur, le véhicule peut continuer à rechercher le véhicule cible par les premiers moyens de détection et une fois le véhicule cible retrouvé, proposer au conducteur de reprendre la conduite autonome immédiatement derrière le véhicule cible. Ainsi, le conducteur peut être sollicité temporairement afin de permettre au véhicule de retrouver la situation de conduite immédiatement derrière le véhicule cible, par exemple en cas de circulation chargée.

Optionnellement, le procédé de conduite autonome peut comprendre une étape E10 de communication avec le véhicule cible par le système télématique 30, par exemple pour transmettre un message informant de la fin du suivi, ou bien pour envoyer une requête d'attente pour faire en sorte que le véhicule cible ralentisse pour attendre le véhicule (étape E10 - Communication avec le véhicule cible pour transmettre un message de type « perte de suivi » ou « demande d'attente »). Cette étape de communication peut être réalisée de véhicule à véhicule dans le cas d'un véhicule cible équipé d'un système télématique compatible ou bien par l'intermédiaire d'un téléphone mobile ou d'un autre dispositif mobile possédé par un occupant du véhicule.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, il est fait référence au scénario prédéfini, qui peut aussi être réglé par le conducteur ou le propriétaire du véhicule alors que l'autre scénario peut éventuellement être décidé au moment du changement de voie par le conducteur. De plus, plusieurs autres scénarios peuvent aussi être prévus de façon à donner plus de possibilités au calculateur et/ou au conducteur. Alternativement, le calculateur peut aussi déterminer un scénario de changement de voie possible selon l'environnement de conduite et le soumettre au conducteur pour approbation.

Par ailleurs, le véhicule peut comprendre tout type de système d'assistance à la conduite autonome ou semi-autonome selon l'état de la technique. De plus, le véhicule selon la présente invention peut être une automobile, mais aussi un bus, un camion ou un véhicule militaire

## Revendications

1. Procédé de conduite autonome permettant à un véhicule de maintenir une situation de conduite immédiatement derrière un véhicule cible, comprenant :
• Une étape (E2) de détection et enregistrement de caractéristiques distinctives du véhicule cible par des premiers moyens de détection (11,13)
• Une étape (E3) de conduite autonome immédiatement derrière ledit véhicule cible réalisée par des moyens de conduite autonome (11,12,13),
• Une étape de détection par des seconds moyens de détection (11,13) d'une situation dans laquelle ledit véhicule n'est plus ou ne sera plus dans une situation de conduite immédiatement derrière ledit véhicule cible,
• Une étape (E4) de vérification par des moyens de contrôle (11,13) de la possibilité de réaliser au moins un changement de voie selon un scénario prédéfini,
• **Caractérisé en ce qu'**il comprend en outre : une étape (E5) de réalisation par les moyens de conduite autonome (11,12,13) dudit au moins un changement de voie selon ledit scénario prédéfini de sorte à permettre au dit véhicule de reprendre la situation de conduite immédiatement derrière le véhicule cible,
et une étape subséquente (E8) de reconnaissance du véhicule cible par les premiers moyens de détection (11,13) à partir des caractéristiques distinctives enregistrées lors de l'étape (E2) de détection et enregistrement de caractéristiques distinctives du véhicule cible.

2. Procédé de conduite autonome selon la revendication précédente, **caractérisé en ce que** si l'étape de vérification détermine qu'un changement de voie selon le scénario prédéfini n'est pas possible, cette étape de vérification est recommencée selon un autre scénario incluant au moins un paramètre différent dudit scénario prédéfini (E6), par exemple la vitesse de changement de voie, la distance de changement de voie ou encore la durée de changement de voie.

3. Procédé de conduite autonome selon la revendication précédente, **caractérisé en ce qu'**une étape de réalisation par les moyens de conduite autonome (11,12,13) dudit au moins un changement de voie selon ledit autre scénario est soumis à une approbation préalable d'un occupant du véhicule au travers de moyens d'interface.

4. Procédé de conduite autonome selon l'une quelconque des revendications précédentes, **caractérisé en ce qu'**il comprend une étape (E10) de communication par un système télématique (30) pour informer le véhicule cible ou un occupant du véhicule cible que ledit véhicule n'est plus dans une situation de conduite immédiatement derrière ledit véhicule cible et / ou pour transmettre une requête visant à adapter la conduite dudit véhicule cible..

5. Dispositif de conduite autonome pour un véhicule, ledit dispositif de conduite autonome comprenant au moins des premiers moyens de détection (11,13), des seconds moyens de détection (11,13), des moyens de contrôle (11,13) et des moyens de conduite autonome (11,12,13) agencés pour mettre en œuvre le procédé de conduite autonome selon l'une quelconque des revendications précédentes.

6. Dispositif de conduite autonome selon la revendication précédente, dans lequel les premiers et seconds moyens de détection (11,13) les moyens de contrôle (11,13) et les moyens de conduites autonomes (11,12,13) comprennent un ou plusieurs capteurs (13) choisis parmi : caméra sensible à la lumière visible, caméra sensible à la lumière infrarouge, radar, radar laser et capteur ultrason ainsi qu'au moins un calculateur (11).

7. Véhicule comportant au moins un dispositif de conduite autonome selon l'une des revendications 5 ou 6.

## Patentansprüche

1. Ein autonomes Fahrverfahren, das es einem Fahrzeug ermöglicht, eine Fahrsituation unmittelbar hinter einem Zielfahrzeug aufrechtzuerhalten, umfassend:
- Ein Schritt (E2) des Erfassens und Aufzeichnens charakteristischer Merkmale des Zielfahrzeugs durch erste Erfassungsmittel (11, 13)
- Ein Schritt (E3) des autonomen Fahrens unmittelbar hinter dem Zielfahrzeug, der von autonomen Fahrmitteln (11, 12, 13) durchgeführt wird
- Schritt des Erfassens einer Situation durch eine zweite Erfassungseinrichtung (11, 13), in der sich das Fahrzeug nicht mehr oder nicht mehr in einer Fahrsituation unmittelbar hinter dem Zielfahrzeug befindet,
- Ein Schritt (E4) des Überprüfens durch Steuermittel (11, 13) der Möglichkeit, mindestens einen Spurwechsel gemäß einem vordefinierten Szenario durchzuführen,
- **Dadurch gekennzeichnet, dass** es ferner umfasst: - einen Schritt (E5) des Ausführens des mindestens einen Fahrspurwechsels durch die autonomen Fahrmittel (11, 12, 13) gemäß dem vordefinierten Szenario, um dem Fahrzeug zu ermöglichen, die Fahrsituation unmittelbar hinter dem Zielfahrzeug wieder aufzunehmen,
und einen anschließenden Schritt (E8) des Erkennens des Zielfahrzeugs durch die erste Erfassungseinrichtung (11, 13) auf der Grundlage der während des Schritts (E2) des Erfassens und Aufzeichnens von Unterscheidungsmerkmalen des Zielfahrzeugs erfassten Unterscheidungsmerkmale.

2. Autonomes Fahrverfahren nach dem vorhergehenden Anspruch, **dadurch gekennzeichnet, dass**, wenn der Überprüfungsschritt feststellt, dass ein Spurwechsel gemäß dem vordefinierten Szenario nicht möglich ist, dieser Überprüfungsschritt gemäß einem anderen Szenario neu gestartet wird, das mindestens einen Parameter enthält, der sich von dem vordefinierten Szenario (E6) unterscheidet, beispielsweise die Spurwechselgeschwindigkeit, die Spurwechseldistanz oder auch die Spurwechseldauer.

3. Autonomes Fahrverfahren nach dem vorhergehenden Anspruch, **dadurch gekennzeichnet, dass** ein Schritt des Durchführens des mindestens einen Fahrspurwechsels gemäß dem anderen Szenario durch die autonomen Fahrmittel (11, 12, 13) einer vorherigen Genehmigung eines Insassen des Fahrzeugs durch Schnittstellenmittel unterliegt.

4. Autonomes Fahrverfahren nach einem der vorhergehenden Ansprüche, **dadurch gekennzeichnet, dass** es einen Schritt (E10) der Kommunikation durch ein Telematiksystem (30) umfasst, um dem Zielfahrzeug oder einem Insassen des Zielfahrzeugs mitzuteilen, dass sich das Fahrzeug nicht mehr in einer Fahrsituation unmittelbar hinter dem Zielfahrzeug befindet und/oder um eine Aufforderung zur Anpassung der Fahrweise des Zielfahrzeugs zu übertragen.

5. Autonome Fahrvorrichtung für ein Fahrzeug, wobei die autonome Fahrvorrichtung mindestens eine erste Erfassungseinrichtung (11, 13), eine zweite Erfassungseinrichtung (11, 13), eine Steuereinrichtung (11, 13) und eine autonome Fahreinrichtung (11, 12, 13) umfasst, die so angeordnet sind, dass sie das autonome Fahrverfahren nach einem der vorhergehenden Ansprüche implementieren.

6. Autonome Fahrvorrichtung nach dem vorhergehenden Anspruch, wobei die ersten und zweiten Erfassungsmittel (11, 13), die Steuermittel (11, 13) und die autonomen Fahrmittel (11, 12, 13) einen oder mehrere Sensoren (13) umfassen, die ausgewählt sind aus: einer Kamera, die für sichtbares Licht empfindlich ist, einer Kamera, die für Infrarotlicht empfindlich ist, einem Radar, einem Laserradar und einem Ultraschallsensor sowie mindestens einem Computer (11).

7. Fahrzeug mit mindestens einer autonomen Fahrvorrichtung nach einem der Ansprüche 5 oder 6.

## Claims

1. An autonomous driving method enabling a vehicle to maintain a driving situation immediately behind a target vehicle, comprising :
- A step (E2) of detecting and recording distinctive characteristics of the target vehicle by first detecting means (11, 13)
- A step (E3) of autonomous driving immediately behind said target vehicle performed by autonomous driving means (11, 12, 13),
- A step of detecting by second detecting means (11, 13) a situation in which said vehicle is no longer or will no longer be in a driving situation immediately behind said target vehicle,
- A step (E4) of checking by control means (11, 13) the possibility of carrying out at least one lane change according to a predefined scenario,
- **Characterised in that** it further comprises :
a step (E5) of carrying out by the autonomous driving means (11, 12, 13) said at least one lane change according to said predefined scenario so as to allow said vehicle to resume the driving situation immediately behind the target vehicle,
and a subsequent step (E8) of recognition of the target vehicle by the first detection means (11, 13) on the basis of the distinctive characteristics recorded during the step (E2) of detecting and recording distinctive characteristics of the target vehicle.

2. Autonomous driving method according to the preceding claim, **characterised in that** if the verification step determines that a lane change according to the predefined scenario is not possible, this verification step is restarted according to another scenario including at least one parameter different from the said predefined scenario (E6), for example the lane change speed, the lane change distance or the lane change duration.

3. An autonomous driving method according to the preceding claim, **characterized in that** a step of carrying out by the autonomous driving means (11, 12, 13) said at least one lane change according to said other scenario is subject to a prior approval of an occupant of the vehicle through interface means.

4. Autonomous driving method according to any of the preceding claims, **characterised in that** it comprises a step (E10) of communication by a telematics system (30) to inform the target vehicle or an occupant of the target vehicle that said vehicle is no longer in a driving situation immediately behind said target vehicle and/or to transmit a request to adapt the driving of said target vehicle.

5. An autonomous driving device for a vehicle, said autonomous driving device comprising at least first sensing means (11, 13), second sensing means (11, 13), control means (11, 13) and autonomous driving means (11, 12, 13) arranged to implement the autonomous driving method according to any of the preceding claims.

6. Autonomous driving device according to the preceding claim, wherein the first and second detection means (11,13), the control means (11,13) and the autonomous driving means (11,12,13) comprise one or more sensors (13) selected from: camera sensitive to visible light, camera sensitive to infrared light, radar, laser radar and ultrasonic sensor as well as at least one computer (11).

7. Vehicle comprising at least one autonomous driving device according to one of claims 5 or 6.
